(19) Europäisches Patentamt
European Patent Office
Office européen des brevets

(11) **EP 1 851 901 B1**

(12) **FASCICULE DE BREVET EUROPEEN**

(45) Date de publication et mention
de la délivrance du brevet:
**25.12.2019 Bulletin 2019/52**

(21) Numéro de dépôt: **06709214.8**

(22) Date de dépôt: **01.02.2006**

(51) Int Cl.:
***H04L 9/32*** *(2006.01)*

(86) Numéro de dépôt international:
**PCT/FR2006/000221**

(87) Numéro de publication internationale:
**WO 2006/082310 (10.08.2006 Gazette 2006/32)**

(54) **PROCEDE DE PRE-AUTHENTIFICATION RAPIDE PAR RECONNAISSANCE DE LA DISTANCE**

VERFAHREN ZUR SCHNELLEN VORAUTHENTIFIKATION DURCH DISTANZERKENNUNG

METHOD FOR FAST PRE-AUTHENTICATION BY DISTANCE RECOGNITION

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **07.02.2005 FR 0501214**

(43) Date de publication de la demande:
**07.11.2007 Bulletin 2007/45**

(73) Titulaire: **Orange**
**75015 Paris (FR)**

(72) Inventeurs:
• **SIBERT, Hervé**
**F-14000 Caen (FR)**
• **GIRAULT, Marc**
**F-14000 Caen (FR)**

(74) Mandataire: **Cougard, Jean-Marie et al**
**Cabinet Beau de Loménie**
**158, rue de l'Université**
**75340 Paris Cedex 07 (FR)**

(56) Documents cités:
EP-A- 0 831 616        EP-A- 1 255 372
US-A1- 2004 066 278

**EP 1 851 901 B1**

**Description**

La présente invention se rapporte au domaine de la cryptographie et des cartes sans contact (NFC : Near Field Communication) ou des puces RFID (Radio Frequency IDentification). En particulier, l'invention concerne un procédé d'authentification préalable à la poursuite d'une communication.

Elle s'applique notamment, mais non exclusivement, à la protection d'informations confidentielles mémorisées dans une puce RFID de faible coût, et en particulier jetable. De telles puces sont par exemple utilisées comme titre de transport. Dans cette application, la puce RFID diffuse son identifiant sur requête d'un lecteur lorsque la puce se trouve à une distance très faible (de l'ordre d'un centimètre) du lecteur. Les droits détenus par le porteur de la carte sont obtenus par le lecteur en interrogeant une base de données associant respectivement identifiants et droits.

Dans le domaine des cartes à puce avec contact, le problème de savoir si la carte est censée ou non répondre à une requête ne se pose pas. En effet, lorsqu'une carte à puce est insérée dans un lecteur de carte à puce, un protocole d'authentification est engagé. Le fait pour le détenteur de la carte à puce d'avoir inséré celle-ci dans le lecteur autorise de facto le lecteur à effectuer cette authentification.

Par contre, une puce sans contact ne peut a priori pas savoir quelle entité lui demande de fournir des informations. Elle répond donc à toute requête en donnant son identifiant sans précaution. Ainsi, en utilisant un émetteur suffisamment puissant, il est possible de faire parvenir des requêtes à toute puce sans contact se trouvant à portée de l'émetteur. La puce traite la requête, mais la réponse n'atteint pas le récepteur. Ce mode de fonctionnement est incompatible avec la sécurité et la protection de la vie privée, et il apparaît souhaitable d'intégrer des fonctions cryptographiques au sein de telles puces.

Or, actuellement, une puce sans contact équipée d'une fonction de sécurité accepte systématiquement d'engager un protocole cryptographique à la réception d'une demande extérieure. Les inconvénients de ce fonctionnement sont très nombreux. Si la puce met en œuvre une authentification par cryptographie à clé secrète, le nombre de lecteurs pouvant l'authentifier doit être très faible pour ne pas trop disperser la clé secrète de la puce. Si de nombreux lecteurs possèdent cette clé, il en résulte un problème au niveau du nombre de clés que doivent connaître les lecteurs, ainsi qu'un problème de sécurité qui repose alors uniquement sur l'inviolabilité des puces et des lecteurs. En ce qui concerne les puces RFID, celles-ci présentent des ressources cryptographiques nécessairement limitées et, pour certaines, non-réutilisables. Dans le cas d'une cryptographie à clé publique, les protocoles au coût le plus bas nécessitent l'enregistrement préalable dans la puce de données utilisables une seule fois. Il est alors possible d'inonder la puce RFID de demandes, ce qui a pour effet d'épuiser ces données, voire de la rendre muette.

Dans l'état de l'art il est connu le document US2004066278 qui décrit un procédé de sécurisation de communications dans un système RFID comprenant un lecteur et une étiquette RF ayant une mémoire configurée pour stocker des informations comprend les étapes consistant à envoyer, à partir du lecteur, un message à l'étiquette; l'étiquette, en réponse au message, génère une valeur de défi et envoie la valeur de défi au lecteur; dans n'importe quel ordre: le lecteur effectue une opération mathématique sur la valeur de défi sur la base d'une valeur de clé pour générer une réponse de défi et envoie la réponse de défi à l'étiquette et l'étiquette identifie indépendamment une réponse de défi sur la base de la valeur de clé et de l'opération mathématique; l'étiquette comparant la réponse au défi calculée par l'étiquette avec la réponse au défi envoyée par le lecteur; et l'étiquette authentifiant le lecteur si la réponse au défi correspond à la réponse au défi. Un système RFID comprenant une étiquette RFID et un lecteur sont configurés pour effectuer les étapes ci-dessus.

Il es aussi connu le document EP1255372 qui décrit un procédé et dispositif de protection de l'intégrité de données

La présente invention a pour but de supprimer ces inconvénients, en permettant à la puce de s'assurer de la légitimité d'une requête d'authentification reçue d'un lecteur, sans pour autant authentifier ce dernier, en se fondant sur la proximité du lecteur comme indice suffisant de sa légitimité à lui demander de s'authentifier. A cet effet, la puce vérifie que le lecteur se trouve dans son champ d'émission qui est très réduit par construction.

L'invention est définie par les revendication indépendantes. Les modes de réalisation préférés son indiqués par les revendicationcation dépendantes.

Cet objectif est atteint par la prévision d'un procédé de pré-authentification d'une première entité par une seconde entité communiquant entre elles par une liaison sans fil. Selon l'invention, le procédé comprend des étapes au cours desquelles :

-   la seconde entité émet une valeur de défi,
-   si la première entité reçoit une valeur de défi, elle applique à la valeur de défi reçue une transformation prédéfinie connue de la seconde entité, pour obtenir une première valeur transformée, puis émet la première valeur transformée obtenue, et
-   si la seconde entité reçoit une valeur transformée, elle compare la valeur transformée reçue à une seconde valeur transformée obtenue en appliquant la transformation prédéfinie à la valeur de défi émise, et considère la pré-

2

authentification réussie si le résultat de la comparaison entre la seconde valeur transformée obtenue et la valeur transformée reçue est inférieur à un seuil prédéfini.

Selon un aspect de réalisation de l'invention, la seconde valeur transformée obtenue et la valeur transformée reçue sont des séquences de bits, la comparaison effectuée par la seconde entité étant une comparaison bit à bit réalisée sur la base du nombre de bits de la seconde valeur transformée qui diffèrent de ceux de la valeur transformée reçue, la valeur de seuil étant définie en fonction du nombre de bits différents.

Selon un aspect de réalisation de l'invention, la valeur de défi émise est différente avec une très grande probabilité d'une valeur de défi émise lors d'une authentification précédente, et non déductible de celle-ci.

Selon un aspect de réalisation de l'invention, la valeur de défi émise par la seconde entité est obtenue à l'aide d'une fonction pseudo-aléatoire appliquée à des données contenues dans la seconde entité.

Selon un aspect de réalisation de l'invention, le procédé est exécuté périodiquement pendant une transaction entre la première entité et la seconde entité.

Selon un aspect de réalisation de l'invention, la transformation prédéfinie fournit une valeur transformée identique à la valeur de défi à laquelle la transformation est appliquée.

Selon un aspect de réalisation de l'invention, la transformation prédéfinie est une fonction dépendant d'une même manière d'une information secrète commune aux deux entités.

L'invention concerne également un module de traitement de données, comprenant des moyens pour communiquer par une liaison sans fil avec une entité. Selon l'invention, le module de traitement de données comprend des moyens pour :

- émettre une valeur de défi,
- calculer une valeur transformée à l'aide d'une transformation prédéfinie connue de l'entité, appliquée à la valeur de défi émise,
- recevoir une valeur transformée à la suite de l'émission de la valeur de défi,
- comparer la valeur transformée reçue à la valeur transformée calculée, et
- considérer l'entité pré-authentifiée si le résultat de la comparaison entre la valeur transformée calculée et la valeur transformée reçue est inférieur à un seuil prédéfini.

L'invention concerne aussi un lecteur comprenant des moyens pour communiquer par une liaison sans fil avec un module de traitement de données. Selon l'invention, le lecteur comprend des moyens pour :

- recevoir une valeur de défi,
- appliquer à la valeur de défi reçue une transformation prédéfinie connue du module de traitement, pour obtenir une valeur transformée, et
- émettre la valeur transformée obtenue en vue d'être authentifié par le module de traitement de données.

L'invention concerne également un programme d'ordinateur pour pré-authentifier une première entité auprès d'une seconde entité communiquant avec la première entité par une liaison sans fil, comprenant des instructions pour commander l'exécution des étapes suivantes lorsqu'il est exécuté par un système de traitement de données associé à la première entité :

- recevoir une valeur de défi,
- appliquer à la valeur de défi reçue une transformation prédéfinie connue de la seconde entité, pour obtenir une valeur transformée, et
- émettre la valeur transformée obtenue en vue d'être pré-authentifiée par la seconde entité.

L'invention porte en outre sur un programme d'ordinateur pour pré-authentifier une première entité auprès d'une seconde entité communiquant avec la première entité par une liaison sans fil, comprenant des instructions pour commander l'exécution des étapes suivantes lorsqu'il est exécuté par un système de traitement de données associé à la seconde entité :

- émettre une valeur de défi,
- calculer une valeur transformée à l'aide d'une transformation prédéfinie connue de la première entité, appliquée à la valeur de défi émise,
- recevoir une valeur transformée à la suite de l'émission de la valeur de défi,
- comparer la valeur transformée reçue à la valeur transformée calculée, et
- considérer la première entité comme pré-authentifiée si le résultat de la comparaison entre la valeur transformée calculée et la valeur transformée reçue est inférieur à un seuil prédéfini.

L'invention concerne en outre un système de pré-authentification d'une première entité par une seconde entité reliées entre elles par une liaison sans fil. Selon l'invention, la seconde entité comprend des moyens pour :

- émettre une valeur de défi à destination de la première entité,
- calculer une première valeur transformée à l'aide d'une transformation prédéfinie connue de la première entité, appliquée à la valeur de défi émise,
- recevoir une valeur transformée à la suite de l'émission de la valeur de défi,
- comparer la valeur transformée reçue à la première valeur transformée calculée, et
- considérer la première entité pré-authentifiée si le résultat de la comparaison entre la première valeur transformée calculée et la valeur transformée reçue est inférieur à un seuil prédéfini,

la première entité comprenant des moyens pour :

- recevoir la valeur de défi émise par la seconde entité,
- appliquer à la valeur de défi reçue la transformation prédéfinie, pour obtenir une seconde valeur transformée, et
- émettre la seconde valeur transformée obtenue en vue d'être authentifiée par la seconde entité.

Un aspect de réalisation préféré de l'invention sera décrit ci-après, à titre d'exemple non limitatif, avec référence aux dessins annexés dans lesquels :

La figure 1 représente schématiquement une puce sans contact ou une puce RFID en communication avec un lecteur ;

La figure 2 est un organigramme qui illustre les différentes étapes du procédé selon l'invention, mis en œuvre dans la puce et dans le lecteur représentés sur la figure 1.

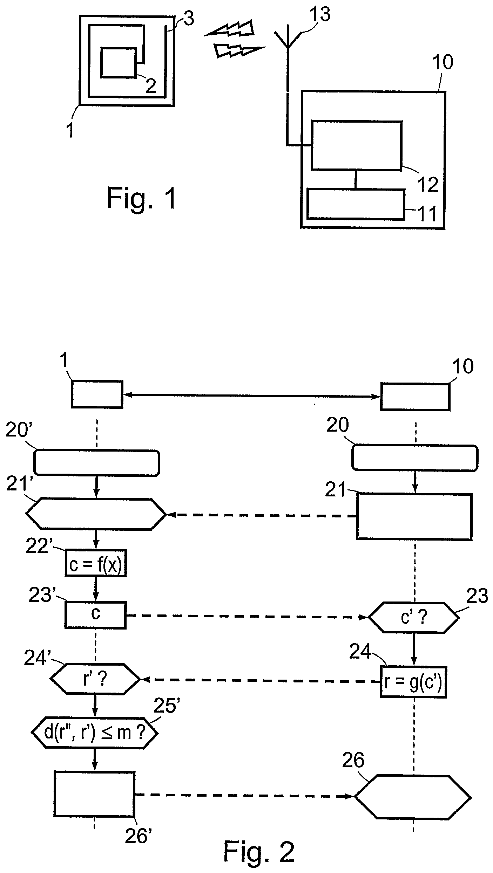

La figure 1 représente une puce sans contact ou RFID 1 à proximité d'un lecteur 10 d'une telle puce. La puce 1 comprend des moyens de calcul 2 très limités, connectés à une antenne 3 de faible portée. Le lecteur 10 comprend un calculateur 11 connecté à des moyens d'émission et de réception 12 raccordés à une antenne 13.

L'invention se base sur l'asymétrie existant entre les moyens d'émission de la puce 1 sans contact ou RFID qui présentent une faible puissance, et ceux du lecteur 10 qui sont comparativement illimités. En effet, si la puce 1 veut envoyer un paquet de données au lecteur 10, il lui suffit de diffuser le paquet à l'aide de son émetteur dont la couverture inclut l'emplacement du lecteur. Si l'émetteur de la puce est trop faible compte tenu de la distance séparant la puce du lecteur, le paquet disparaît dans le bruit ambiant à l'emplacement du lecteur qui ne reçoit alors pas le paquet. Or la puce n'émet que si elle est sollicitée par un lecteur qui lui demande de s'identifier. Une telle sollicitation est légitime si la puce se trouve à une distance très courte (inférieure à quelques centimètres) du lecteur, comme dans le cas par exemple d'un titre de transport.

Conformément au procédé illustré sur la figure 2, le lecteur 10 exécute une procédure d'authentification 20 au cours de laquelle il émet périodiquement une requête d'authentification (étape 21). Si une puce se trouve à portée du lecteur, elle détecte le signal de transmission de la requête, ce qui déclenche l'exécution par la puce d'une procédure d'authentification 20'.

A la première étape de cette procédure, la puce reçoit la requête d'authentification (étape 21'). A la suite de la réception de cette requête, la puce 1 calcule à l'aide d'une fonction f intégrée dans la puce une séquence de bits c constituant un défi (étape 22'), et envoie la séquence c obtenue au lecteur 10 (étape 23'). Si la carte ne se trouve plus dans le champ du lecteur, celui-ci ne reçoit pas la séquence c et la procédure prend fin. Si au contraire le lecteur reçoit une séquence c' de défi (étape 23), correspondant à la séquence c éventuellement altérée par la transmission, il calcule alors une réponse r en appliquant à la séquence c' reçue une fonction g implémentée à la fois dans le lecteur et dans la puce, et transmet cette réponse r (étape 24). La réponse r se présente également sous la forme d'une séquence de bits dépendant de la séquence c' du défi. Si la puce reçoit une réponse r' éventuellement altérée par la transmission (étape 24'), alors elle compare cette réponse à une réponse r'' théorique qu'elle calcule à l'étape 25' à l'aide de la fonction g appliquée à la séquence c : $r'' = g(c)$. Pour cette comparaison, on peut ne pas chercher l'égalité parfaite, afin de pallier d'éventuelles erreurs dans la transmission (interférences etc.).

Bien entendu, le calcul de la réponse r'' (étape 25') peut être effectué à un autre moment, par exemple avant la réception de r'.

Si la différence entre r'' et r' est nulle (si l'on se tient à une égalité parfaite) ou inférieure à une valeur m de seuil prédéfinie, alors le résultat de la vérification de la proximité du lecteur 10 est positif. Sinon, y compris dans le cas où la puce n'a pas reçu de réponse, le résultat de la vérification de la proximité du lecteur est négatif. Si la vérification de proximité est positive, la procédure d'authentification se poursuit d'une manière classique à l'étape 26' au cours de laquelle la puce émet son identifiant, qui est reçu par le lecteur 10 à l'étape 26.

L'invention permet ainsi de remplacer le contrôle visuel que peut effectuer l'utilisateur d'une carte à puce avec contact, lorsqu'il introduit sa carte dans un lecteur.

La fonction g peut être tenue secrète et varier suivant les entités (puces et lecteurs), de manière à permettre une authentification plus forte. Par exemple, la fonction g peut être une fonction de chiffrement paramétrée par une clé secrète. La fonction g générale est alors connue, mais les clés diffèrent suivant des groupes d'entités : seules des entités ayant connaissance de la même clé pourront communiquer entre elles.

Cette procédure de détection de la proximité du lecteur peut être intégrée dans des puces à très bas coût, telle que les puces RFID. Cette procédure peut être effectuée une ou plusieurs fois lors d'une transaction entre le lecteur 10 et la puce 1, c'est-à-dire lors d'une séquence d'échanges entre le lecteur et la puce.

La différence entre les deux séquences de bits r' et r" est avantageusement représentée par une distance, notée d qui est par exemple calculée à l'aide de la fonction poids de Hamming et définie de la manière suivante :

$$d(r', r'') = w(r' \oplus r'') \qquad (1)$$

où $\oplus$ désigne l'opération "OU exclusif" effectuée bit à bit, et w désigne le poids de Hamming (nombre de bits non nuls d'une séquence de bits).

Autrement dit, d(r', r") est le nombre de bits non nuls de la somme bit à bit de r' et r", ou le nombre de positions dans lesquelles les bits de r' et de r" diffèrent. L'usage d'une telle fonction permet d'une manière simple de limiter les effets de légères erreurs de transmission.

Afin de tenir compte d'une éventuelle perte de synchronisation entre le défi et la réponse, on peut aussi mesurer la distance entre r" et des modifications de r' résultant d'une telle perte de synchronisation, et choisir comme distance finale le minimum de toutes les distances calculées.

Dans un premier aspect de réalisation, la fonction f est une fonction constante et ne donne donc pas lieu à une réalisation particulière : la séquence c de défi est une séquence de bits constante, par exemple de 64 bits, stockée dans la puce 1. La fonction g est de préférence la fonction identité, mais toute autre fonction simple à calculer pour la puce convient également. La vérification de la proximité du lecteur est effectuée une fois, ou de préférence périodiquement par la puce, ceci de manière à rendre plus difficile une attaque active après exécution de l'authentification. L'émission de la séquence r = g(c) par le lecteur 10 à l'étape 24 est de préférence effectuée avec une puissance réduite afin de diminuer la probabilité d'interception de c, et de rendre plus difficile une attaque active après exécution du protocole.

A l'étape 25', le test d'égalité entre la séquence r' reçue et la valeur r" calculée localement par la puce en appliquant la fonction g à une valeur de défi c est effectué en vérifiant que d(r", r') $\leq$ m, où m est une constante (par exemple m = 4).

Le niveau de sécurité obtenu par ce aspect de réalisation est, pour les valeurs données en exemple, de plus de $2^{43}$. Autrement dit, pour ces valeurs, un lecteur qui n'a jamais communiqué avec la puce 1, et qui se trouve hors de portée de celle-ci, a moins d'une chance sur $2^{43}$ d'envoyer une valeur aléatoire qui soit acceptée par la puce comme réponse à son défi. Dans le cas où l'on ne craint pas d'erreur de transmission (par exemple si cette dernière est protégée par un code correcteur d'erreurs), on peut choisir m = 0, ce qui signifie que la puce 1 accède à la requête d'identification émise par le lecteur 10 si et seulement si r' = g(c).

Dans un second aspect de réalisation, la fonction g est identique à celle choisie dans le premier mode de réalisation, mais à chaque défi effectué, la puce émet une séquence c différente et dans une certaine mesure imprédictible, ceci de manière à ce que le lecteur ne puisse pas anticiper la valeur de c. En particulier, chaque séquence c utilisée ne peut pas être mathématiquement déduite des séquences envoyées précédemment, au moins de celles envoyées dans un passé récent). Il existe de nombreuses manières connues de réaliser cette condition.

Par exemple, au moment de la personnalisation de la puce, on introduit dans la mémoire de données de la puce une liste de valeurs choisies au hasard, que la puce parcourt séquentiellement pour choisir les valeurs de c utilisées dans ses défis. Lorsque la liste est entièrement parcourue, soit la puce se bloque, soit elle reprend la liste à son début, soit encore une procédure de rechargement de nouvelles valeurs est mise en œuvre.

Une autre possibilité pour calculer de nouvelles valeurs de c consiste à utiliser une fonction pseudo-aléatoire f appliquée à certaines données contenues dans la puce. Ces données peuvent par exemple provenir d'un compteur incrémenté à chaque appel de la fonction f ou d'une mémoire stockant un "état courant" de cette fonction, ou plus généralement de tout ou partie de l'état de la mémoire de la puce au moment du calcul, incluant éventuellement une donnée fournie par le lecteur préalablement à l'authentification. La fonction f peut être par exemple un registre à décalage à rétroaction linéaire, ou une combinaison de registres par une fonction booléenne non-linéaire, l'"état courant" étant dans ce cas celui des registres. La fonction f a une sortie de longueur fixe, par exemple 64 bits.

La fonction g est préférentiellement la fonction identité, afin de limiter les opérations que la puce doit réaliser. Dans ce mode de réalisation, on s'inscrit dans une communication longue entre la puce 1 et le lecteur 10, pour laquelle il est souhaitable d'exécuter la vérification de proximité (étapes 21' à 25' et 21 à 24) de manière répétée. L'authentification est effectuée une fois ou périodiquement par la puce. La valeur de seuil m est choisie par exemple égale à 8.

Pour améliorer la sécurité d'un défi, compte tenu de la divulgation des valeurs de c précédentes, on peut mettre à jour l'état courant (par exemple, dans le cas d'un registre à décalage à rétroaction linéaire, en calculant de manière continue les états ultérieurs du registre entre deux défis, ceci tant que la puce est alimentée). Le niveau de sécurité obtenu par ce mode de réalisation est, pour les valeurs données en exemple, de plus de $2^{31}$ à chaque exécution. Puisque la fonction f est supposée être un bon générateur pseudo-aléatoire, un lecteur qui connaît la puce 1 ne peut anticiper la valeur de c. Pour les valeurs données en exemple, un lecteur quelconque qui se trouve hors de portée de la puce a donc moins d'une chance sur $2^{31}$ d'envoyer une valeur aléatoire c qui soit acceptée par la puce comme réponse à son défi.

Dans un troisième aspect de réalisation, la fonction f est comme dans le second mode de réalisation. En revanche, la fonction g prend en paramètre un argument secret, par exemple de 64 bits. Cette fonction peut être une fonction de chiffrement symétrique à base de registres à décalage à rétroaction linéaire, avec une initialisation à partir d'une séquence de 64 bits et d'une clé commune à la puce 1 et au lecteur 10 avec lequel celle-ci est destinée à communiquer. Dans ce mode de réalisation, on se place dans le cadre d'une communication longue et sensible entre la puce et le lecteur. Comme précédemment, l'authentification est effectuée une fois ou périodiquement par la puce. La valeur de seuil m est par exemple égale à 8.

Le niveau de sécurité obtenu par ce mode de réalisation est de plus de $2^{43}$ pour les valeurs données en exemple. Puisque f est supposée être un bon générateur pseudo-aléatoire, un lecteur qui connaît la puce 1 ne peut anticiper la valeur de défi c. En supposant de plus que la fonction g est sûre, pour les valeurs proposées en exemple, un lecteur quelconque qui se trouve hors de portée de la puce a donc moins d'une chance sur $2^{43}$ d'envoyer une valeur aléatoire qui soit acceptée par la puce comme réponse à son défi. Ce dernier mode de réalisation permet de manière continue de tester à la fois la proximité et l'authenticité du lecteur comme possédant le droit d'authentifier la puce.

**Revendications**

**1.** Procédé d'authentification comprenant une pré-authentification d'une première entité (10) par une seconde entité (1) pour déterminer si une authentification de la seconde entité par la première entité doit se poursuivre, la première entité et la seconde entité communiquant entre elles par une liaison sans fil, la dite première entité étant une carte sans contact ou une puce RFID et ladite deuxième entité étant un lecteur ; ledit procédé comprenant des étapes de :

- réception, par la seconde entité (1), d'une requête d'authentification émise par la première entité (10),
- en réponse à la requête d'authentification, émission, par la seconde entité (1), d'une valeur de défi (c), **caractérisé en ce qu'**il comprend des étapes au cours desquelles :
- si la première entité (10) reçoit (23) une valeur de défi (c'), elle applique à la valeur de défi reçue une transformation (g) prédéfinie connue de la seconde entité, pour obtenir une première valeur transformée (r), puis émet (24) la première valeur transformée obtenue (r), et
- si la seconde entité reçoit (24') une valeur transformée (r'), elle compare (25') la valeur transformée reçue (r') à une seconde valeur transformée (r'') obtenue en appliquant la transformation (g) prédéfinie à la valeur de défi (c) émise, et considère la pré-authentification réussie si le résultat de la comparaison entre la seconde valeur transformée obtenue (r'') et la valeur transformée (r') reçue est inférieur à un seuil (m) prédéfini, et
- la seconde entité (1) s'authentifie auprès de la première entité (10) en réponse la requête d'authentification si la pré-authentification a réussi,

le procédé étant caractérisé à ce que la seconde valeur transformée obtenue (r'') et la valeur transformée reçue (r') sont des séquences de bits, la comparaison effectuée par la seconde entité (1) étant une comparaison bit à bit réalisée sur la base du nombre de bits de la seconde valeur transformée qui diffèrent de ceux de la valeur transformée reçue, la valeur de seuil (m) étant définie en fonction du nombre de bits différents.

**2.** Procédé selon la revendication 1,
**caractérisé en ce que** la valeur de défi (c) émise est différente avec une très grande probabilité d'une valeur de défi émise lors d'une authentification précédente, et non déductible de celle-ci.

**3.** Procédé selon la revendication 1 ou 2,
caractérisé que la valeur de défi (c) émise par la seconde entité (1) est obtenue à l'aide d'une fonction pseudo-aléatoire appliquée à des données contenues dans la seconde entité (1).

4. Procédé selon l'une des revendications 1 à 3,
**caractérisé en ce qu'**il est exécuté périodiquement pendant une transaction entre la première entité (10) et la seconde entité (1).

5. Procédé selon l'une des revendications 1 à 4,
**caractérisé en ce que** la transformation prédéfinie (g) fournit une valeur transformée identique à la valeur de défi (c) à laquelle la transformation est appliquée.

6. Procédé selon l'une des revendications 1 à 5,
**caractérisé en ce que** la transformation prédéfinie (g) est une fonction dépendant d'une même manière d'une information secrète commune aux deux entités (1, 10).

7. Module de traitement de données (1), comprenant des moyens (2, 3) pour communiquer par une liaison sans fil avec une entité (10) afin de déterminer si une authentification du module de traitement de données par l'entité doit se poursuivre, comprend des moyens
(2, 3) pour :

- recevoir une requête d'authentification émise par l'entité,
- émettre, en réponse à la requête d'authentification, une valeur de défi (c),
- calculer une valeur transformée (r″) à l'aide d'une transformation (g) prédéfinie connue de l'entité (10), appliquée à la valeur de défi émise (c), ladite valeur transformée (r″) étant une séquence de bits dépendant de la séquence de la valeur de défi (c),
- recevoir une valeur transformée (r') à la suite de l'émission de la valeur de défi,
- comparer la valeur transformée reçue (r') à la valeur transformée (r″) calculée,
- considérer l'entité (10) pré-authentifiée si le résultat de la comparaison entre la valeur transformée (r″) calculée et la valeur transformée (r') reçue est inférieur à un seuil (m) prédéfini, et
- s'authentifier auprès de l'entité en réponse à la requête d'authentification si la pré-authentification a réussi

le module de traitement de données étant **caractérisé en ce que** la valeur transformée calculée (r″) et la valeur transformée reçue (r') sont des séquences de bits, la comparaison effectuée par le module de traitement de données étant une comparaison bit à bit réalisée sur la base du nombre de bits de la seconde valeur transformée qui diffèrent de ceux de la valeur transformée reçue, la valeur de seuil (m) étant définie en fonction du nombre de bits différents.

8. Lecteur (10) comprenant des moyens (11, 12, 13) pour communiquer par une liaison sans fil avec un module de traitement de données (1) pour déterminer si une authentification du module de traitement de données par le lecteur doit se poursuivre, comprenant des moyens
(11, 12, 13) pour :

- envoyer une requête d'authentification au module de traitement de données (1),
- recevoir une valeur de défi (c') du module de traitement de données (1) suite à l'envoi de la requête d'authentification, **caractérisé en ce qu'**il comprend des moyens pour :
- appliquer à la valeur de défi reçue une transformation (g) prédéfinie connue du module de traitement (1), pour obtenir une valeur transformée (r), ladite valeur transformée (r) étant une séquence de bits dépendant de la séquence de la valeur de défi (c') reçue,
- émettre la valeur transformée obtenue (r) en vue d'être pré-authentifié par le module de traitement de données, et
- recevoir, suite à l'émission de la valeur transformée obtenue (r), un identifiant du module de traitement de données (1) en réponse à la requête d'authentification si une pré-authentification réalisée par le module de traitement de données à partir de la valeur transformée obtenue (r) a réussi.

9. Programme d'ordinateur pour pré-authentifier une première entité auprès d'une seconde entité communiquant avec la première entité par une liaison sans fil, comprenant des instructions pour commander l'exécution des étapes suivantes lorsqu'il est exécuté par un système de traitement de données associé à la première entité (10) :

- envoyer une requête d'authentification,
- recevoir, en réponse à la requête d'authentification, une valeur de défi **caractérisé en ce qu'**il est adapté pour

- appliquer à la valeur de défi reçue (c') une transformation (g) prédéfinie connue de la seconde entité (1), pour obtenir une valeur transformée (r), ladite valeur transformée (r) étant une séquence de bits dépendant de la séquence de la valeur de défi (c') reçue, et

- émettre la valeur transformée obtenue (r) en vue d'être pré-authentifiée par la seconde entité (1),

- recevoir, suite à l'émission de la valeur transformée obtenue (r), un identifiant de la seconde entité (1) en réponse à la requête d'authentification si une pré-authentification réalisée par le module de traitement de données à partir de la valeur transformée obtenue (r) a réussi.

**10.** Programme d'ordinateur pour pré-authentifier une première entité auprès d'une seconde entité communiquant avec la première entité par une liaison sans fil, comprenant des instructions pour commander l'exécution des étapes suivantes lorsqu'il est exécuté par un système de traitement de données associé à la seconde entité (1) :

- recevoir une requête d'authentification,

- émettre une valeur de défi (c) en réponse à la requête d'authentification,

- calculer une valeur transformée (r") à l'aide d'une transformation (g) prédéfinie, appliquée à la valeur de défi émise (c),

- recevoir une valeur transformée (r') à la suite de l'émission de la valeur de défi **caractérisé en ce qu'**il est adapté pour

- comparer la valeur transformée reçue (r') à la valeur transformée (r") calculée, la valeur transformée calculée (r") et la valeur transformée reçue (r') étant des séquences de bits, la comparaison de la valeur transformée calculée et de la valeur transformée reçue étant une comparaison bit à bit réalisée sur la base du nombre de bits de la valeur transformée calculée qui diffèrent de ceux de la valeur transformée reçue, la valeur de seuil (m) étant définie en fonction du nombre de bits différents,

- considérer la première entité (10) comme pré-authentifiée si le résultat de la comparaison entre la valeur transformée (r") calculée et la valeur transformée (r') reçue est inférieur à un seuil (m) prédéfini, et

- s'authentifier en réponse à la requête d'authentification si la pré-authentification a réussi.

**11.** Système d'authentification configuré pour pré-authentifier une première entité (10) par une seconde entité (1) reliées entre elles par une liaison sans fil,

**caractérisé en ce que** la seconde entité (1) est conforme à la revendication 7, et

ce que la première entité (10) est conforme à la revendication 8.

## Patentansprüche

**1.** Vorauthentifikationsverfahren, das eine Vorauthentifikation einer ersten Entität (10) die durch eine zweite Entität (1) umfasst, um zu bestimmen, ob eine Authentifikation der zweiten Entität durch die erste Entität fortgesetzt werden muss, wobei die erste Entität und die zweite Entität miteinander durch eine drahtlose Verbindung in Kommunikation stehen; wobei die erste Entität eine berührungslose Karte oder ein RFID-Chip ist, und die zweite Entität ein Lesegerät ist, wobei das Verfahren folgende Schritte umfasst:

- Empfangen durch die zweite Entität (1) einer Authentifikationsanfrage, die von der ersten Entität (10) gesendet wird,

- als Antwort auf die Authentifikationsanfrage Senden durch die zweite Entität (1) eines Herausforderungswerts (c), **dadurch gekennzeichnet, dass** es Schritte umfasst, in deren Verlauf:

- falls die erste Entität (10) einen Herausforderungswert (c') empfängt (23), sie an den empfangenen Herausforderungswert eine vordefinierte Umwandlung (g) anwendet, die der zweiten Entität bekannt ist, um einen ersten umgewandelten Wert (r) zu erhalten, dann den erhaltenen umgewandelten ersten Wert (r) ausgibt (24), und

- falls die zweite Entität einen umgewandelten Wert (r') empfängt (24'), sie den empfangenen umgewandelten Wert (r') mit einem zweiten umgewandelten Wert (r") vergleicht (25'), der unter Anwenden der vordefinierten Umwandlung (g) an den gesendeten Herausforderungswert (c) erhalten wird, und die Vorauthentifikation als erfolgreich betrachtet, falls das Resultat des Vergleichs zwischen dem erhaltenen umgewandelten zweiten Wert (r") und dem empfangenen umgewandelten Wert (r') kleiner ist als ein vordefinierter Schwellenwert (m), und

- die zweite Entität (1) sich bei der ersten Entität (10) als Antwort auf die Authentifikationsanfrage authentifiziert, falls die Vorauthentifikation erfolgreich war,

Verfahren **dadurch gekennzeichnet, dass** der erhaltene umgewandelte zweite Wert (r") und der empfangene umgewandelte Wert (r') Bitfolgen sind, wobei der von der zweiten Entität (1) ausgeführte Vergleich ein bitweiser Vergleich ist, der auf der Basis der Anzahl von Bits des zweiten umgewandelten Werts, die sich von denjenigen des empfangenen umgewandelten Werts unterscheiden, ausgeführt wird, wobei der Schwellenwert (m) in Abhängigkeit von der Anzahl unterschiedlicher Bits definiert wird.

**2.** Verfahren nach Anspruch 1,
**dadurch gekennzeichnet, dass** der gesendete Herausforderungswert (c) mit einer sehr hohen Wahrscheinlichkeit von einem Herausforderungswert, der bei einer vorhergehenden Authentifikation gesendet wurde, unterschiedlich und von diesem nicht ableitbar ist.

**3.** Verfahren nach Anspruch 1 oder 2,
**dadurch gekennzeichnet, dass** der Herausforderungswert (c), der von der zweiten Entität (1) gesendet wird, mit Hilfe einer Pseudozufallsfunktion erhalten wird, die an Daten angewandt wird, die in der zweiten Entität (1) enthalten sind.

**4.** Verfahren nach einem der Ansprüche 1 bis 3,
**dadurch gekennzeichnet, dass** es periodisch während einer Transaktion zwischen der ersten Entität (10) und der zweiten Entität (1) ausgeführt wird.

**5.** Verfahren nach einem der Ansprüche 1 bis 4,
**dadurch gekennzeichnet, dass** die vordefinierte Umwandlung (g) einen umgewandelten Wert liefert, der mit dem Herausforderungswert (c), an den die Umwandlung angewandt wird, identisch ist.

**6.** Verfahren nach einem der Ansprüche 1 bis 5,
**dadurch gekennzeichnet, dass** die vorvordefinierte Umwandlung (g) eine Funktion ist, die auf gleiche Art von einer Geheiminformation, die die zwei Entitäten (1, 10) gemeinsam haben, abhängt.

**7.** Datenverarbeitungsmodul (1), das Mittel (2, 3) zum Kommunizieren über eine drahtlose Verbindung mit einer Entität (10) umfasst, um zu bestimmen, ob eine Authentifikation des Datenverarbeitungsmoduls durch die Entität fortgesetzt werden muss, das Mittel (2, 3) umfasst, um:

- eine Authentifikationsanfrage, die von der Entität gesendet wird, zu empfangen
- als Antwort auf die Authentifikationsanfrage einen Herausforderungswert (c) zu senden,
**dadurch gekennzeichnet, dass** es Mittel umfasst, um
- einen umgewandelten Wert (r") mit Hilfe einer vordefinierten Umwandlung (g), die der Entität (10) bekannt ist, die an den gesendeten Herausforderungswert (c) angewandt wird, zu berechnen, wobei der umgewandelte Wert (r") eine Bitfolge ist, die von der Sequenz des Herausforderungswerts (c) abhängt,
- einen umgewandelten Wert (r') im Anschluss an das Senden des Herausforderungswerts zu empfangen,
- den empfangenen umgewandelten Wert (r') mit dem berechneten umgewandelten Wert (r") zu vergleichen,
- die Entität (10) als vorauthentifiziert zu betrachten, falls das Resultat des Vergleichs zwischen dem berechneten umgewandelten Wert (r") und dem empfangenen umgewandelten Wert (r') kleiner ist als ein vordefinierter Schwellenwert (m), und
- es sich bei der Entität als Antwort auf die Authentifikationsanfrage zu authentifizieren, falls die Vorauthentifikation erfolgreich war,

Datenverarbeitungsmodul **dadurch gekennzeichnet, dass** der berechnete umgewandelte Wert (r") und der empfangene umgewandelte Wert (r') Bitfolgen sind, wobei der von dem Datenverarbeitungsmodul ausgeführte Vergleich ein bitweiser Vergleich ist, der auf der Basis der Anzahl von Bits des zweiten umgewandelten Werts, die sich von denjenigen des empfangenen umgewandelten Werts unterscheiden, ausgeführt wird, wobei der Schwellenwert (m) in Abhängigkeit von der Anzahl unterschiedlicher Bits definiert wird.

**8.** Lesegerät (10), das Mittel (11, 12, 13) umfasst, um durch eine drahtlose Verbindung mit einem Datenverarbeitungsmodul (1) zu kommunizieren, um zu bestimmen, ob eine Authentifikation des Datenverarbeitungsmoduls durch das Lesegerät fortgesetzt werden muss, das Mittel (11, 12, 13) umfasst, um:

- eine Authentifikationsanfrage zu dem Datenverarbeitungsmodul (1) zu senden,
- einen Herausforderungswert (c') von dem Datenverarbeitungsmodul (1) im Anschluss an das Senden der Authentifikationsanfrage zu empfangen,

**dadurch gekennzeichnet, dass** es Mittel umfasst, um:

- an den empfangenen Herausforderungswert eine vordefinierte Umwandlung (g), die dem Datenverarbeitungsmodul (1) bekannt ist, anzuwenden, um einen umgewandelten Wert (r) zu erhalten, wobei der umgewandelte Wert (r) eine Bitfolge ist, die von der empfangenen Sequenz des Herausforderungswerts (c') abhängt,
- den erhaltenen umgewandelten Wert (r) zu senden, um von dem Datenverarbeitungsmodul vorauthentifiziert zu werden, und
- im Anschluss an das Senden des erhaltenen umgewandelten Werts (r) einen Identifikator des Datenverarbeitungsmoduls (1) als Antwort auf die Authentifikationsanfrage zu empfangen, falls eine Vorauthentifikation, die von dem Datenverarbeitungsmodul ausgehend von dem erhaltenen umgewandelten Wert (r) ausgeführt wurde, erfolgreich war.

9. Computerprogramm zum Vorauthentifizieren einer ersten Entität bei einer zweiten Entität, die mit der ersten Entität über eine drahtlose Verbindung in Kommunikation steht, das Anweisungen umfasst, um das Ausführen der folgenden Schritte anzuordnen, falls es von einem Datenverarbeitungssystem, das mit der ersten Entität (10) assoziiert ist, ausgeführt wird:

- Senden einer Authentifikationsanfrage,
- als Antwort auf die Authentifikationsanfrage Empfangen eines Herausforderungswerts,
**dadurch gekennzeichnet, dass** es angepasst ist, um
- an den empfangenen Herausforderungswert (c') eine vordefinierte Umwandlung (g), die der zweiten Entität (1) bekannt ist, anzuwenden, um einen umgewandelten Wert (r) zu erhalten, wobei der umgewandelte Wert (r) eine Bitfolge ist, die von der Sequenz des empfangenen Herausforderungswerts (c') abhängt, und
- den erhaltenen umgewandelten Wert (r) zu senden, um von der zweiten Entität (1) vorauthentifiziert zu werden,
- im Anschluss an das Senden des erhaltenen umgewandelten Werts (r), einen Identifikator der zweiten Entität (1) als Antwort auf die Authentifikationsanfrage zu empfangen, falls eine Vorauthentifikation, von dem Datenverarbeitungsmodul ausgehend von dem erhaltenen umgewandelten Wert (r) erfolgreich war.

10. Computerprogramm für das Vorauthentifizieren einer ersten Entität bei einer zweiten Entität, die mit der ersten Entität durch eine drahtlose Verbindung in Kommunikation steht, das Anweisungen umfasst, um die Ausführung der folgenden Schritte anzuordnen, wenn es von einem Datenverarbeitungssystem, das mit der zweiten Entität (1) assoziiert ist, ausgeführt wird:

- Empfangen einer Authentifikationsanfrage,
- Senden eines Herausforderungswerts (c) als Antwort auf die Authentifikationsanfrage,
- Berechnen eines umgewandelten Werts (r'') mit Hilfe einer vordefinierten Umwandlung (g), die an den gesendeten Herausforderungswert (c) angewandt wird,
- Empfangen eines umgewandelten Werts (r') im Anschluss an das Senden des Herausforderungswert,
**dadurch gekennzeichnet, dass** es angepasst ist, um
- den empfangenen umgewandelten Wert (r') mit dem berechneten umgewandelten Wert (r'') zu vergleichen, wobei der berechnete umgewandelte Wert (r'') und der empfangene umgewandelte Wert (r') Bitfolgen sind, wobei der Vergleich des berechneten umgewandelten Werts und des empfangenen umgewandelten Werts ein bitweiser Vergleich ist, der auf der Basis der Anzahl von Bits des berechneten umgewandelten Werts, die sich von denjenigen des empfangenen umgewandelten Werts unterscheiden, ausgeführt wird, wobei der Schwellenwert (m) in Abhängigkeit von der Anzahl unterschiedlicher Bits definiert ist,
- Betrachten der ersten Entität (10) als vorauthentifiziert, falls das Resultat des Vergleichs zwischen dem berechneten umgewandelten Wert (r'') und dem empfangenen umgewandelten Wert (r') kleiner als ein vordefinierter Schwellenwert (m) ist, und
- sich als Antwort auf die Authentifikationsanfrage zu authentifizieren, falls die Vorauthentifikation erfolgreich war.

11. Authentifikationssystem, das konfiguriert ist, um eine erste Entität (10) durch eine zweite Entität (1), die miteinander durch eine drahtlose Verbindung verbunden sind, vorzuauthentifizieren,
**dadurch gekennzeichnet, dass** die zweite Entität (1) mit Anspruch 7 übereinstimmt, und dass die erste Entität (10) mit Anspruch 8 übereinstimmt.

**Claims**

1. Authentication method comprising a pre-authentication of a first entity (10) by a second entity (1) to determine whether an authentication of the second entity by the first entity should be continued, the first entity and the second entity communicating with one another by a wireless link, said first entity being a contactless card or an RFID chip and said second entity being a reader; said method comprising steps of:

   - reception, by the second entity (1), of an authentication request transmitted by the first entity (10),
   - in response to the authentication request, transmission, by the second entity (1), of a challenge value (c), **characterized in that** it comprises steps during which:
   - if the first entity (10) receives (23) a challenge value (c'), it applies to the challenge value received a predefined transformation (g) known to the second entity, to obtain a first transformed value (r), then transmits (24) the first transformed value obtained (r), and
   - if the second entity receives (24') a transformed value (r'), it compares (25') the received transformed value (r') to a second transformed value (r") obtained by applying the predefined transformation (g) to the challenge value (c) transmitted, and considers the pre-authentication successful if the result of the comparison between the second transformed value obtained (r") and the transformed value (r') received is below a predefined threshold (m), and
   - the second entity (1) is authenticated with the first entity (10) in response to the authentication request if the pre-authentication has succeeded,

   the method being **characterized in that** the second transformed value obtained (r") and the transformed value received (r') are sequences of bits, the comparison made by the second entity (1) being a bit-to-bit comparison performed on the basis of the number of bits of the second transformed value which differ from those of the transformed value received, the threshold value (m) being defined as a function of the number of different bits.

2. Method according to Claim 1, **characterized in that** the challenge value (c) transmitted is different with a very great probability from a challenge value transmitted in a preceding authentication, and cannot be deduced therefrom.

3. Method according to Claim 1 or 2, **characterized in that** the challenge value (c) transmitted by the second entity (1) is obtained using a pseudo-random function applied to data contained in the second entity (1).

4. Method according to one of Claims 1 to 3, **characterized in that** it is executed periodically during a transaction between the first entity (10) and the second entity (1).

5. Method according to one of Claims 1 to 4, **characterized in that** the predefined transformation (g) supplies a transformed value identical to the challenge value (c) to which the transformation is applied.

6. Method according to one of Claims 1 to 5, **characterized in that** the predefined transformation (g) is a function dependent in the same way on a secret information item common to the two entities (1, 10).

7. Data processing module (1), comprising means (2, 3) for communicating by a wireless link with an entity (10) in order to determine whether an authentication of the data processing module by the entity should be continued, comprising means (2, 3) for:

   - receiving an authentication request transmitted by the entity,
   - transmitting, in response to the authentication request, a challenge value (c), **characterized in that** it comprises means for
   - calculating a transformed value (r") using a predefined transformation (g) known to the entity (10), applied to the challenge value transmitted (c), said transformed value (r") being a sequence of bits dependent on the sequence of the challenge value (c),
   - receiving a transformed value (r') following the transmission of the challenge value,
   - comparing the transformed value received (r') to the transformed value (r") calculated,
   - considering the entity (10) pre-authenticated if the result of the comparison between the transformed value (r") calculated and the transformed value (r') received is below a predefined threshold (m), and
- being authenticated with the entity in response to the authentication request if the pre-authentication has succeeded,

the data processing module being **characterized in that** the transformed value calculated (r") and the transformed value received (r') are sequences of bits, the comparison made by the data processing module being a bit-to-bit comparison performed on the basis of the number of bits of the second transformed value which differ from those of the transformed value received, the threshold value (m) being defined as a function of the number of different bits.

8.  Reader (10) comprising means (11, 12, 13) for communicating by a wireless link with a data processing module (1) to determine whether an authentication of the data processing module by the reader should be continued, comprising means (11, 12, 13) for:

    - sending an authentication request to the data processing module (1),
    - receiving a challenge value (c') from the data processing module (1) following the sending of the authentication request,

    **characterized in that** it comprises means for:

    - applying to the challenge value received a predefined transformation (g) known to the processing module (1), to obtain a transformed value (r), said transformed value (r) being a sequence of bits dependent on the sequence of the challenge value (c') received,
    - transmitting the transformed value obtained (r) in order to be pre-authenticated by the data processing module, and
    - receiving, following the transmission of the transformed value obtained (r), an identifier of the data processing module (1) in response to the authentication request if a pre-authentication performed by the data processing module on the basis of the transformed value obtained (r) has succeeded.

9.  Computer programme for pre-authenticating a first entity with a second entity communicating with the first entity by a wireless link, comprising instructions for controlling the execution of the following steps when it is executed by a data processing system associated with the first entity (10) :

    - sending an authentication request,
    - receiving, in response to the authentication request, a challenge value
    **characterized in that** it is suitable for
    - applying to the challenge value received (c') a predefined transformation (g) known to the second entity (1), to obtain a transformed value (r), said transformed value (r) being a sequence of bits dependent on the sequence of the challenge value (c') received, and
    - transmitting the transformed value obtained (r) in order to be pre-authenticated by the second entity (1),
    - receiving, following the transmission of the transformed value obtained (r), an identifier of the second entity (1) in response to the authentication request if a pre-authentication performed by the data processing module on the basis of the transformed value obtained (r) has succeeded.

10. Computer programme for pre-authenticating a first entity with a second entity communicating with the first entity by a wireless link, comprising instructions for controlling the execution of the following steps when it is executed by a data processing system associated with the second entity (1) :

    - receiving an authentication request,
    - transmitting a challenge value (c) in response to the authentication request,
    - calculating a transformed value (r") using a predefined transformation (g), applied to the challenge value transmitted (c),
    - receiving a transformed value (r') following the transmission of the challenge value
    **characterized in that** it is suitable for
    - comparing the transformed value received (r') to the transformed value (r") calculated, the transformed value calculated (r") and the transformed value received (r') being sequences of bits, the comparison of the transformed value calculated and of the transformed value received being a bit-to-bit comparison performed on the basis of the number of bits of the transformed value calculated which differ from those of the transformed value received, the threshold value (m) being defined as a function of the number of different bits,

- considering the first entity (10) to be pre-authenticated if the result of the comparison between the transformed value (r") calculated and the transformed value (r') received is below a predefined threshold (m), and
- being authenticated in response to the authentication request if the pre-authentication has succeeded.

**11.** Authentication system configured to pre-authenticate a first entity (10) by a second entity (1) linked to one another by a wireless link,
**characterized in that** the second entity (1) conforms to Claim 7, and **in that** the first entity (10) conforms to Claim 8.

**Fig. 1**

**Fig. 2**

**EP 1 851 901 B1**

## RÉFÉRENCES CITÉES DANS LA DESCRIPTION

**Documents brevets cités dans la description**

- US 2004066278 A

- EP 1255372 A